# EUROPEAN PATENT APPLICATION

(11) **EP 1 498 627 A1**
(43) Date of publication of application: **19.01.2005**
(21) Application number: 04254251.4
(22) Date of filing: 15.07.2004
(51) Int. Cl.: F16D 7/04

(54) **Torque limiting coupling.**

(30) Priority: 15.07.2003 GB 0316515
(71) Applicant: Norman, Denise, Nr Barmouth, Gwynedd, LL43 2AG (GB)
(72) Inventor: The designation of the inventor has not yet been filed
(74) Representative: Cardwell, Stuart Martin

(57) **Abstract**

A jaw clutch (10) comprising first (16) and second jaws (18) arranged for positive engagement with one another wherein the first (16) and second jaws (18) have contacting surfaces (20) comprising crests and troughs, the transition between crests and troughs being gradual.

The torque required to interrupt the drive is preferably adjustable. The torque required to interrupt the drive is not necessarily the same for torques applied in different directions.

## Description

The present invention relates to torque limiting couplings.

Torque limiting couplings are used in a variety of situations to protect elements that are subjected to torsion.

Torque limiting couplings are used to interrupt the drive when a predetermined level of torque is exceeded. For example, a torque limiting coupling may be fitted to a drive train between the power source (e.g. an engine) and the driven element (e.g. a marine propeller) to protect the power source should the driven element suddenly stop (e.g. by entangling the propeller with an anchor warp). Conversely, a torque limiting coupling can be used to protect the driven end of a drive chain from the power source. An example of this is fitting a torque limiting coupling between the chuck and motor of an electric screwdriver to prevent the screws from being over-tightened or their heads becoming damaged.

One of the simplest ways to provide a torque limiting coupling is to connect two parts of a drive chain using a shaft that slides inside a tube, the shaft and tube being connected to one another with a sacrificial shear pin. If the drive chain is overloaded, the shear pin shears off at the interface between the shaft and tube, leaving the respective ends of the drive chain free to rotate. This is an unsatisfactory solution, since pieces of the sheared pin may become lodged in other moving parts, and the exact torque required to shear the pin is not easily determined and/or predicted.

Certain torque limiting couplings (e.g. clutches) provide a means of limiting the torque transmitted by a drive shaft in a more predictable and reliable way than shear pin couplings. Clutch type couplings are available in a variety of forms, and usually rely on frictional forces between two or more plates arranged in intimate contact with one another. The torque setting at which one clutch plate slips relative to the other (and hence limits the torque) can be pre-set by adjusting the friction between the plates (e.g. by adjusting the mating pressure of the plates).

The clutch plates can be replaced by jaws, or other suitable interlocking elements, e.g. castellated plates, such that direct a drive is provided between the driving and driven ends of the shaft when the torque transmitted thereby is below a critical level.

Problems encountered with conventional clutch assemblies include the need for a relatively high contact pressure between the clutch plates to maintain drive between the driving and driven ends of the shaft. This is disadvantageous, because to release the clutch (i.e. deliberately disengage the drive) often requires a large force, which is energy inefficient. Furthermore, clutch slippage causes wear and unpredictable transmission of drive in the shaft.

Clutches having castellated jaws overcome some of the above problems, but have some or all of the following disadvantages:
1. When "slipping", the castellations impact one another, causing excessive wear and noise.
2. Frictional forces between contacting castellation can cause them to heat up quite rapidly, which sometimes leads to localised melting or welding.
3. The transition between driving and slipping modes (i.e. between being engaged and disengaged) is not smooth.

It is therefore an object of the present invention to overcome one or more of the above problems.

Accordingly, the present invention provides a jaw clutch comprising first and second jaws arranged for positive engagement with one another wherein the first and second jaws have contacting surfaces comprising crests and troughs, the transition between crests and troughs being gradual.

The gradual transition between crests and troughs of the contacting surfaces of the jaws may take any suitable form. Suitable forms may be sinusoidal or semicircular forms. Alternatively, suitable forms may comprise any other curve having a desired shape.

The crests and troughs are preferably substantially symmetrical about one or more planes such that the operating characteristics of the invention are substantially the same, regardless of the direction of the torque applied thereto. Alternatively, the crests and troughs may be asymmetrical such that the critical torque require for slippage is greater in one direction than in the other. This effect may be achieved by skewing the form of the crests and troughs.

Preferably, the first and second jaws are located at ends of first and second substantially co-axial shafts. Preferably, the first jaw is slidably located at an end of the first shaft. The second jaw is preferably fixed at an end of the second shaft.

Where the first jaw is adapted to slide relative to the first shaft, it is preferably inhibited from rotating relative thereto. A preferred embodiment of the invention sees the first jaw being located on a splined section of the first shaft.

Where the first jaw is slidable, it may be adapted for sliding between engaged and disengaged positions. In the engaging position, the first and second jaws are arranged for positive engagement with one another. The jaws may be substantially free to rotate with respect to one another when the first jaw is in the disengaged position.

The first jaw is preferably biased towards an engaging position using a biasing means. The biasing means is preferably a spring. Where provided, the spring may be arranged to act between the first jaw and a collar associated with the first shaft.

The jaw clutch of the invention is preferably enclosed using a sleeve. The various components of the invention are preferably manufactured of durable materials.

A preferred embodiment of the invention shall now be described, by way of example only, with reference to the accompanying drawings, in which;
Figure 1 shows a partial cross-section through a preferred embodiment of the invention;
Figures 2, 3 and 4 show orthographic projections of 2, 3 and 4 peak jaws respectively;
Figure 5 is a partial development of a jaw;
Figure 6 is a series illustrating how one jaw is adapted to slide parallel to the axis of rotation such that the jaws can slide past one another; and
Figure 7 shows a series of partial sections on a 4-peak jaw.

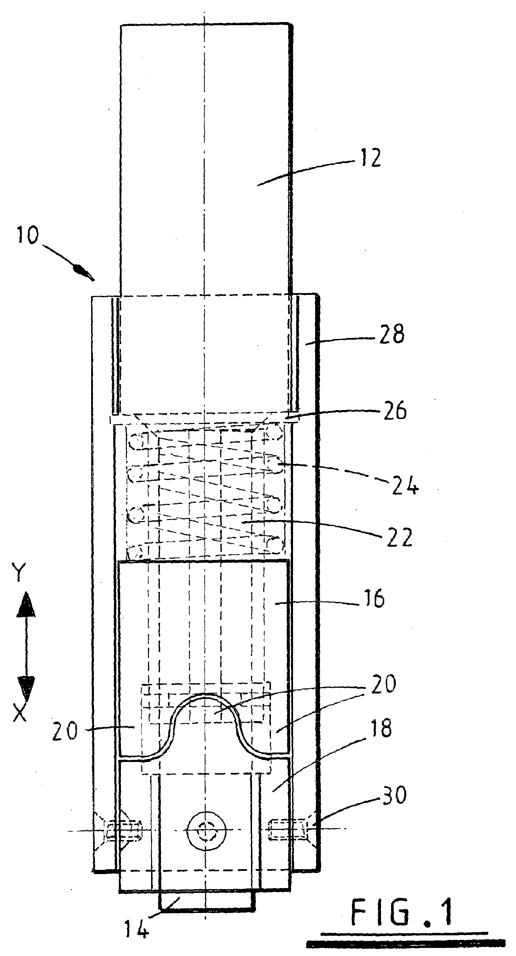

Referring to Figure 1 of the drawings, a torque limiting coupling 10 according to the invention is shown for connecting first 12 and second 14 drive shafts. The first drive shaft 12 provides a driving torque that is transmitted, via the coupling 10, to the second, driven shaft 14.

The end of the first shaft 12 carries a first sliding clutch jaw 16 that is arranged to engage with a second, fixed clutch jaw 18 located at the end of the second shaft 14. The first 16 and second 18 clutch jaws are castellated, having a plurality of sinusoidal lobes 20 thereon. The lobes 20 are arranged to tessellate, thereby enabling a torque to be transmitted from the first shaft 12 to the second shaft 14 and vice-versa.

The first jaw 16 is located on a splined shaft 22 such that it can slide X to an engaging position with respect to the second jaw 18. Conversely, the jaw 16 can slide Y to a disengaging position. The first jaw 16 is biased to an engaging position by virtue of the spring 24 acting between the first jaw 16 and a collar 26. The coupling 10 is enclosed by a sleeve 28, which is affixed to the second shaft 14 using screws 30.

The coupling 10 is arranged to slip at a pre-determined torque, which is set by adjusting the compression in the spring 24. The higher the spring compression, the higher the torque required to interrupt the drive. An adjustable collar 26 may be provided such that the critical torque can be adjusted in-situ.

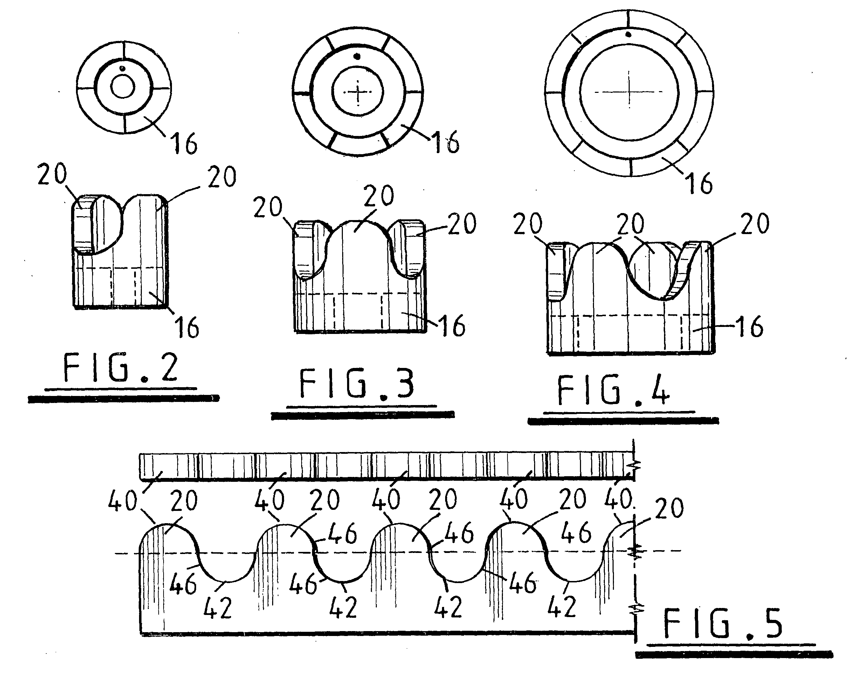

Figures 2, 3 and 4 show alternative jaw 16 geometries having 2, 3 and 4 lobes 20 each respectively.

Figure 5 is a partial development of a jaw 16 having a plurality of lobes 20. The transition between peaks 40 and troughs 42 is gradual such that the lobes 20 are defined by a series of curves 46. In this particular instance, the curves 46 are alternating quarter-circles.

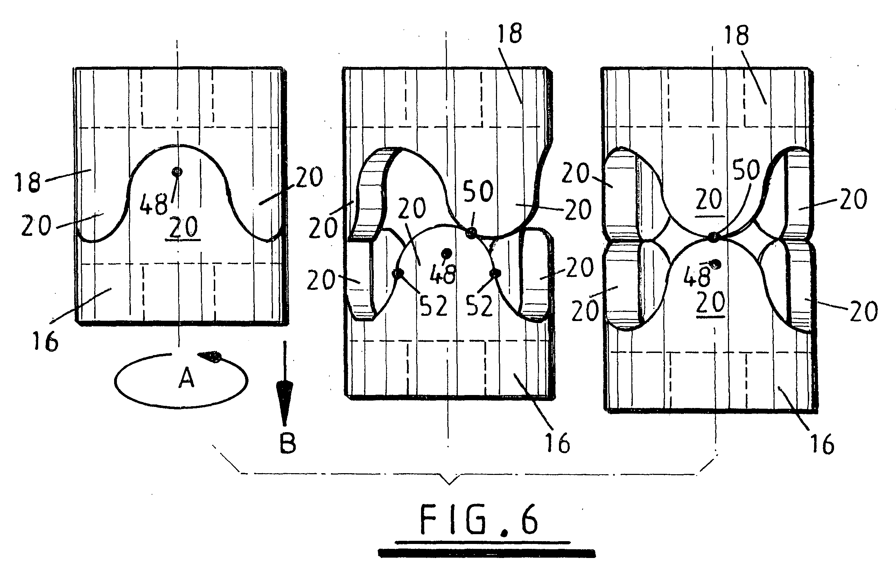

Figure 6 shows how the clutch jaws 16 & 18 are normally engaged, but if an excessive torque is applied, the lobes 20 rise up and over one another of the respective jaws 16 & 18 can slide past each other. In the illustrated example, the mark 48 slides right A and downwards B as the lobes 20 of the lower jaw 18 slides past those of the upper jaw 18. As can be seen, when engaged, there is surface contact between opposing jaws. However, as one jaw 16 slides past the other 18, the contact area becomes a line 50. Because contact is always maintained between the jaws, even when slipping, the likelihood of impacting the lobes is greatly reduced.

Each lobe 20 has 2 points of inflection 52 whose gradient in the drawings is shown to be vertical. This means that the transition between the points contact 50 moving horizontally and vertically is smooth.

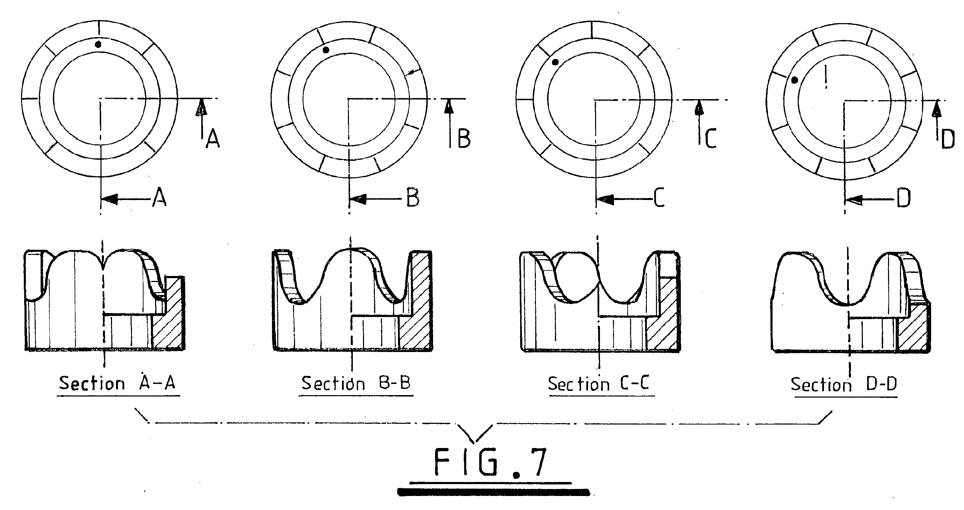

Finally, Figure 7 shows a series of partial sections on a jaw 16 having 4 lobes 20. The jaw 16 is annular for accommodating either the splined shaft 22 or second shaft 14 of the invention.

## Claims

1. A jaw clutch (10) comprising first (16) and second jaws (18) arranged for positive engagement with one another **characterised in that** the first (16) and second jaws (18) have contacting surfaces (20) comprising crests and troughs, the transition between crests and troughs being gradual.

2. A jaw clutch (10) as claimed in claim 1, wherein the gradual transition between crests and troughs of the contacting surfaces of the jaws takes a curved form.

3. A jaw clutch (10) as claimed in claim 2, wherein the curved form is sinusoidal.

4. A jaw clutch (10) as claimed in claim 2, wherein the curved form is semicircular.

5. A jaw clutch (10) as claimed in any of claims 1 to 4, wherein the crests and troughs are substantially symmetrical such that the operating characteristics are substantially unaffected by the direction of the torque applied thereto.

6. A jaw clutch (10) as claimed in claim 1 or claim 2, wherein the crests and troughs are asymmetrical such that the critical torque required for slippage is greater in one direction than in the other.

7. A jaw clutch (10) as claimed in claim 6, wherein the asymmetry is achieved by skewing the form of the crests and/or troughs.

8. A jaw clutch (10) as claimed in any of claims 1 to 7, wherein the first (16) and second jaws (18) are located at ends of first (12) and second (14) substantially co-axial shafts.

9. A jaw clutch (10) as claimed in claim 8, wherein the first jaw (16) is slidably located at an end of the first shaft (12).

10. A jaw clutch (10) as claimed in claim 8, wherein the second jaw (18) is fixed at an end of the second shaft (14).

11. A jaw clutch (10) as claimed in claim 9, wherein the first jaw (16) is inhibited from rotating relative to the first shaft (12).

12. A jaw clutch (10) as claimed in claim 11, wherein the first shaft (12) comprises a splined section (22), which engages the first jaw (16).

13. A jaw clutch (10) as claimed in any of claims 8 to 12, wherein the first jaw (16) is adapted for sliding between engaged and disengaged positions, the engaged position being **characterised in that** the first (16) and second jaws (18) are arranged for positive engagement with one another, and the disengaged position being **characterised in that** the first (16) and second jaws (18) are substantially free to rotate with respect to one another.

14. A jaw clutch (10) as claimed in claim 13, wherein the first jaw (16) is biased towards an engaging position using a biasing means.

15. A jaw clutch (10) as claimed in claim 14, wherein the biasing means is a spring (24).

16. A jaw clutch (10) as claimed in claim 15, wherein the spring (24) is arranged to act between the first jaw (16) and a collar (26) associated with the first shaft (12).

17. A jaw clutch (10) as claimed in claim 15 or claim 16, wherein clutch (10) is adapted slip at a pre-determined torque, the torque being predeterminable by adjusting the compression in the spring (24).

18. A jaw clutch (10) as claimed in claim 16 or claim 17, wherein the location of the collar (26) on the shaft is adjustable.

19. A jaw clutch (10) as claimed in any of claims 1 to 18, wherein the jaw clutch is enclosed in a sleeve (28).

20. A jaw clutch (10) substantially as hereinbefore described, with reference to and as illustrated in the accompanying drawings.
